# EUROPÄISCHE PATENTSCHRIFT

(11) **EP 0 693 677 B1**
(45) Veröffentlichungstag und Bekanntmachung des Hinweises auf die Patenterteilung: **06.04.2005**
(21) Anmeldenummer: 95111467.7
(22) Anmeldetag: 21.07.1995
(51) Int. Cl.: G01K 7/02, G01K 17/08

(54) **Stromversorgungseinrichtung, insbesondere für elektrisch betriebene Messinstrumente**
Current supply device, especially for electrically powered measuring instruments
Dispositif d'alimentation en courant, en particulier pour des instruments de mesure à actionnement électrique

(30) Priorität: 22.07.1994 DE 4425972
(43) Veröffentlichungstag der Anmeldung: 24.01.1996
(73) Patentinhaber: Pfeiffer, Ulrich, 78112 St. Georgen (DE)
(72) Erfinder: Pfeiffer, Ulrich, Dipl.-Ing. FH, 78112 St. Georgen (DE); Glosch, Hartmut, Dipl.-Ing. FH, D-78652 Deisslingen-Lauffen (DE); Ashauer, Matthias, Dipl.-Ing., D-78089 Unterkirnach (DE)
(74) Vertreter: Goy, Wolfgang, Dipl.-Phys.

(56) Entgegenhaltungen:
- DE-A- 3 331 104
- DE-A- 3 925 391
- FR-A- 2 484 640
- GB-A- 2 265 754
- US-A- 4 653 443
- SENSORS AND ACTUATORS A, Bd. 37/38, Juni 1993 - August 1993 LAUSANNE CH, Seiten 77-81, XP 000411378 CARLOS AZEREDO LEME E.A. 'MULTI-PURPOSE INTERFACE FOR SENSOR SYSTEMS FABRICATED BY CMOS TECHNOLOGY WITH POST-PROCESSING'
- SENSORS AND ACTUATORS A, Bd. 42, Nr. 1/3, 15.April 1994 LAUSANNE CH, Seiten 493-496, XP 000449968 T. ELBEL E.A. 'THERMOELECTRIC RADIATION MICROSENSORS'
- SENSORS AND ACTUATORS A, Bd. 42, Nr. 1/3, 15.April 1994 LAUSANNE CH, Seiten 666-671, XP 000449995 P.M. SARRO E.A. 'A SILICON-SILICON NITRIDE MEMBRANE FABRICATION PROCESS FOR SMART THERMAL SENSORS'
- SENSORS AND ACTUATORS A, Bd. 43, Nr. 1/3, Mai 1994 LAUSANNE CH, Seiten 276-288, XP 000454123 J.J. JUIJSING E.A. 'DEVELOPMENTS IN INTEGRATED SMART SENSORS'

## Beschreibung

Die Erfindung betrifft eine Stromversorgungseinrichtung, insbesondere für elektrisch betriebene Meßinstrumente, nach dem Oberbegriff des Anspruchs 1.

Es ist Zweck der Erfindung, für die Stromversorgung von elektrisch betriebenen Meßinstrumenten anstelle von ökologisch bedenklichen Trockenbatterien oder Kleinsammlern eine andere Gattung von elektrischen Stromquellen zu finden.

Die DE-A-31 23 336 zeigt einen Wärmezähler zum Messen der Wärmemenge, die von einem strahlenden Körper an einen Raum abgegeben wird und bei dem zu dessen Stromversorgung eine Batterie von Thermoelementen Verwendung findet, welche teilweise durch den wärmestrahlenden Körper beaufschlagt wird und teilweise der Umluft des Raumes ausgesetzt ist. Obwohl bei diesem bekannten Wärmezähler eine größere Anzahl von einzelnen Thermoelementen zu einer Thermobatterie zusammengefaßt ist, ist die hierbei erzielbare Gesamtspannung als Speisespannung für ein elektrisch betriebenes Meßinstrument nur bedingt ausreichend. Aus diesem Grunde wird auch bei diesem bekannten Wärmezähler ein elektrolytisches Anzeigesystem verwendet, welches bei hohen Strömen und kleinen Spannungen funktionsfähig ist. Es ist somit erkennbar, daß diese Art von Stromversorgung für elektrisch betriebene Meßinstrumente nur bedingt verwendbar ist, insbesondere dann, wenn das zu versorgende Meßinstrument elektrische Meß- und Steuerschaltungen aufweist, die eine definierte Versorgungsspannung, meist von einigen Volt, voraussetzen.

Die DE-A-39 25 391 offenbart eine Thermobatterie, die auf einem Substratkörper vermittels Leiterstrukturen aus zwei verschiedenen Materialien, nämlich p-dotiertes Silizium und Aluminium, gebildet und in hoher Dichte nach Art eines flachen Rasters angeordnet sind. Diese sogenannte Thermosäule liefert lediglich thermoelektrische Signale für Meßzwecke. Es handelt sich also nur um einen Meßsensor.

Die Druckschrift "Sensors and Actuators A, Bd. 37/38, Juni 1993 - August 1993, S. 77-81" offenbart eine Einrichtung mit einer Thermobatterie, die auf einen Substratkörper, nämlich SiO₂ vermittels Leiterstrukturen aus zwei verschiedenen Materialien gebildet und in hoher Dichte nach Art eines flachen Rasters angeordnet sind.

Ausgehend von einer Stromversorgungseinrichtung der eingangs angegebenen Art liegt der Erfindung die **Aufgabe** zugrunde, die Thermobatterie so auszugestalten, daß wesentlich höhere Thermospannungen in der Größenordnung von einigen Volt erzeugbar sind.

Die technische **Lösung** ist gekennzeichnet durch die Merkmale im Kennzeichen des Anspruchs 1.

Der Vorteil der erfindungsgemäßen Stromversorgungseinrichtung besteht darin, daß die Thermobatterie für die Versorgung eines elektrischen Gerätes, insbesondere eines elektrisch betriebenen Meßinstruments, ausreichend elektrische Energie liefert. Dies wird unter anderem erfindungsgemäß dadurch erreicht, daß zwischen der kalten Seite und der heißen Seite eine möglichst hohe Temperaturdifferenz entsteht. Dadurch wird insgesamt die Thermospannung erhöht. Die Erfindung hat eine Reihe von weiteren Vorteilen aufzuweisen. So kann beim Einsatz der Stromversorgung nach der Erfindung bei solchen elektrisch betriebenen Meßinstrumenten, die der Messung von Temperaturen und Wärmemengen dienen, eine besondere Wärmequelle entfallen, da die Thermomatrix nach der Erfindung unmittelbar von der zu überwachenden bzw. zu messenden Wärmequelle beaufschlagt wird. Ein besonderer Aufwand für die Stromversorgung des Meßgerätes entfällt, so daß ein zeitlich praktisch unbegrenzter Betrieb ohne Austausch von Energiespeichern wie Trockenbatterien, Akkumulatoren und dergleichen möglich ist. In anderen Anwendungsfällen ist es möglich, eine künstliche Wärmequelle, welche beispielsweise durch ein Abwärmesystem gebildet ist, der Thermomatrix nach der Erfindung zuzuordnen.

Anspruch 20 definiert ein mikrotechnologisches Verfahren zur Herstellung einer elektrischen Thermobatterie für eine Stromversorgungseinrichtung gemäß der Erfindung. Ein elektrisches Heizkosten- bzw. Warmwasserkostenverteiler, welcher eine erfindungsgemäße Stromversorgungseinrichtung integriert, ist in Anspruch 16 definiert.

Vorteilhafte Weiterbildungen ergeben sich aus den Unteransprüchen.

Die Erfindung ist anhand von bevorzugten Ausführungsbeispielen, die in den beiliegenden Zeichnungen dargestellt sind, in der folgenden Beschreibung im einzelnen erläutert. In den Zeichnungen zeigen:
- Fig. 1: eine aus dem Stand der Technik bekannte Thermobatterie in schematischer Darstellung zur Erklärung des Grundaufbaus einer derartigen Thermobatterie,
- Fig. 2: der innere Teil der erfindungsgemäßen Thermomatrix in Fig. 7, in schematischer Darstellung,
- Fig. 3: eine selbständige Baueinheit in Vorderansicht mit einer Thermomatrix,
- Fig. 4: die Baueinheit nach Fig. 3 in einer rechten Seitenansicht,
- Fig. 5: einen elektrischen Heizkostenverteiler in teilweise geschnittener Seitenansicht mit einer Thermomatrix (Thermobatterie) nach den Fig. 3 und 4,
- Fig. 6: Vorderansicht des Heizkostenverteilers gemäß Fig. 5 und
- Fig. 7: perspektivische, teilweise geschnittene, Darstellung der erfindungsgemäßen Thermomatrix nach Fig. 2 in der Ausgestaltung als Thermomodul.

Bei der Anordnung nach der erwähnten DE-A-3123336 sind die verfügbaren Thermoelemente teils voneinander räumlich getrennt, teils an einer Stelle zusammengefaßt, an ihrem jeweiligen Einsatzort angebracht.

Es ist somit die Anzahl der einsetzbaren Thermoelemente und damit auch die durch die Thermobatterie erzeugbare Gesamtspannung begrenzt. Andernfalls würden der bauliche Aufwand und die Kosten unangemessen hoch. Die Einsatzmöglichkeiten einer derartigen Thermobatterie für einen elektrischen Wärmezähler sind somit begrenzt.

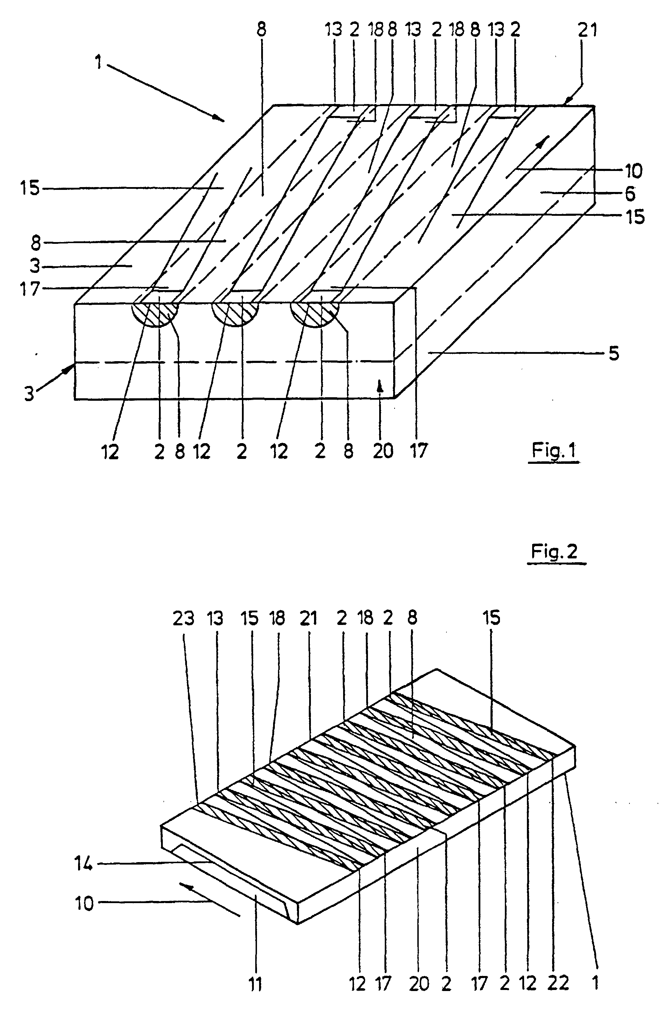

Zur Erzeugung höherer Spannungen für die Stromversorgung eines elektrisch betriebenen Meßinstrumentes wird der Einsatz nach einem mikrotechnologischen Verfahren erzeugter Bauelemente vorgeschlagen, wie diese in den Fig. 1 und 2 dargestellt sind.

Bei diesen mikrotechnologisch hergestellten Thermobatterien kann eine sehr große Anzahl einzelner Thermoelemente 2 im Raster der Thermomatrix 1 angeordnet werden. So ist die Ausbildung von 1000 und mehr Thermoelementen 2 im Raster der Thermomatrix 1 möglich, so daß eine relativ hohe Ausgangsspannung bei ausreichendem Strom erzeugt werden kann. Hierzu trägt die besondere Ausgestaltung des Substratkörpers 3 bei, welche bei kleinster Temperaturdifferenz relativ hohe Ausgangsspannungen an den Thermoelementen 2 bei noch vertretbarem elektrischem Innenwiderstand ermöglicht.

Die Thermoelemente 2 der Thermomatrix 1 sind durch in großer Anzahl auf einem Substratkörper 3 rasterartig angeordnete, dotierte Siliziumzonen 8, die ihrerseits gegenüber dem Substratkörper 3 isoliert sind, realisiert. Diese Siliziumzonen 8 sind zweckmäßigerweise parallel zueinander, rasterartig auf dem Substratkörper 3 vorgesehen.

Die einzelnen Siliziumzonen 8 liegen nebeneinander und sind wechselweise miteinander mit Metallstegen 15 verbunden. Diese bestehen vorteilhafterweise aus Aluminium.

Diese Metallstege 15 waren Teil einer auf den Substratkörper 3 mit den dotierten Siliziumzonen 8 aufgebrachten Metall - vorzugsweise Aluminiumschicht. Durch Ätzen sind die Metallstege 15 aus der Metallschicht hergestellt worden.

Die einzelnen Metallstege 15 bilden mit den mit ihnen verbundenen dotierten Siliziumzonen 8 jeweils Thermoelemente 2, die in außerordentlich hoher Dichte und Anzahl auf dem Substratkörper 3 aufgebracht sind.

Die Thermoelemente 2 sind elektrisch in Reihe geschaltet, so daß Einzelspannungen der Thermoelemente 2 zur Erhöhung einer hohen Ausgangsspannung addiert werden.

So liefert z. B. ein Thermoelement 2, das aus dotiertem Silizium und Nickel besteht, eine Thermospannung von 0,463 mV/°C. Bei 1 000 auf dem Substratkörper 3 angeordneten Thermoelementen 2 und bei einem Temperaturgefälle von 10° C längs der Ebene des Substratkörpers 3 und in Richtung der Stege 8 wird eine Ausgangsspannung von etwa 4,6 V erzeugt. Dies ist ein Spannungswert, der für die Versorgung der meisten elektrisch betriebenen Meßinstrumente ausreicht. Dies gilt auch für solche Meßinstrumente, die mit umfangreichen elektronischen Schaltungen, so z. B. Mikrocomputer, etc., bestückt sind.

In Fig. 1 ist eine Thermomatrix (Thermobatterie) 1 mit einigen Thermoelementen 2 im Detail dargestellt. Auf einem Substratkörper 3 ist eine mit einem mikrotechnologischen Verfahren hergestellten bestimmte Dotierungsstruktur entgegengesetzer Leitfähigkeit ausgebildet. Der Substratkörper 3 kann entweder aus massivem, dotiertem Halbleitermaterial oder wie bei dem Ausführungsbeispiel gemäß Fig. 1 aus einem Träger 5 bestehen, auf dem eine entsprechend dotierte oder implantierte Halbleiterschicht 6 aufgebracht ist. Für den vorliegenden Zweck eignet sich für den Substratkörper 3 als Halbleitermaterial 6 Silizium von n-Leitfähigkeit.

Auf der Halbleiteroberfläche des Substratkörpers 3 sind nebeneinanderliegende, in Richtung des Wärmegefälles (Pfeil 10) verlaufende p-dotierte Zonen in Form von schmalen, isolierten Stegen 8 vorgesehen. Diese können durch ein geeignetes Dotierungsverfahren, z. B. durch Diffusion oder Implantation, gebildet werden.

Die Enden 12, 13 dieser aus p-dotierten Zonen bestehenden Stege 8 sind nun jeweils mittels dünnschichtiger metallener Stege 15, vorzugsweise aus Aluminium, mit den jeweils entgegengesetzten Enden 13, 12 der jeweils benachbarten Stege 8 verbunden. Diese Stege 15 sind aus einer auf die nitrierte oder oxydierte Halbleiteroberfläche des Substratkörpers 3 gesputterten dünnen Metallschicht, insbesondere einer Aluminiumschicht, vermittels einer geeigneten Maskierung ausgeätzt. An ihren beiden äußeren Enden 12, 13 sind die p-dotierten Stege 8 von der Nitrierung oder Oxydierung ausgenommen, um eine kontaktgebende Verbindung mit den jeweiligen Enden 17, 18 der metallenen Stege 15 zu ermöglichen. Die Nitrierung oder Oxydierung der p-strukturierten Halbleiteroberfläche ist u. a. notwendig, um eine Isolation der übrigen Bereiche der Stege 8 gegenüber den dünnschichtigen metallenen Stegen 15 zu gewährleisten.

Die wechselweise an den beiden Enden 12, 13 der dotierten Stege 8 auf der Halbleiteroberfläche bestehenden Verbindungen 12, 17; 13, 18 mit den metallenen Stegen 15 sind Teil der einzelnen Thermoelemente 2, welche jeweils durch die Teile 8, 15; 12, 13 und 17, 18 gebildet sind. Diese einzelnen Thermoelemente 2 der Thermomatrix (Thermobatterie) 1 sind auf der Halbleiteroberfläche des Substratkörpers 3 in hoher Anzahl und Dichte aufgebracht.

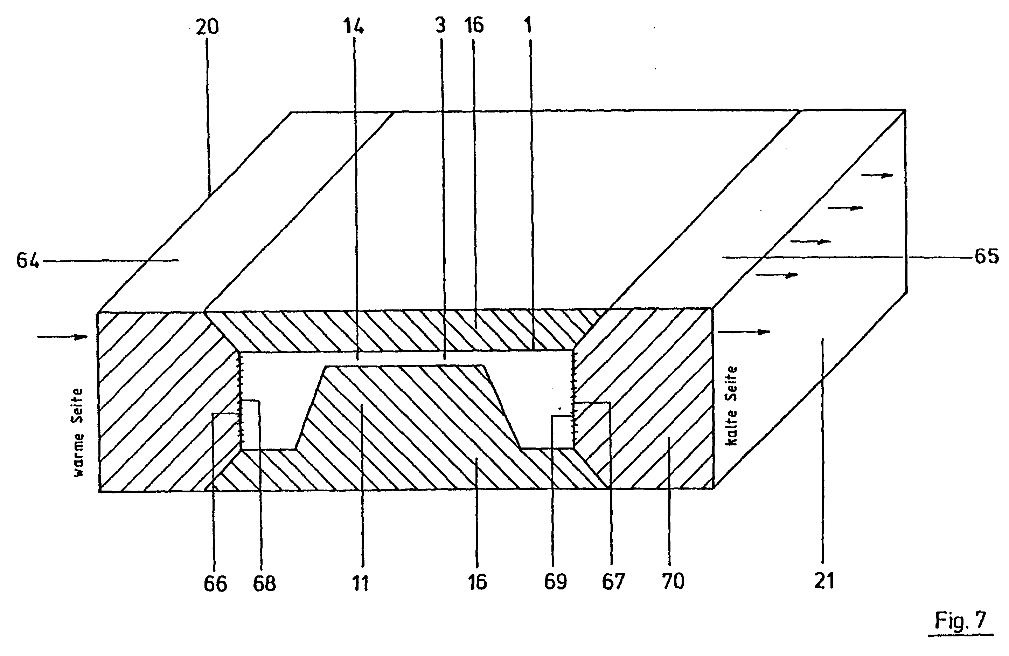

In Fig. 2 ist ein etwas größerer Bereich der geringfügig abgewandelten Thermobatterie 1 schematisch dargestellt. Eine Vielzahl von einzelnen Thermoelementen 2 (im praktischen Anwendungsfall ca. 500 bis 2 000) sind auf der Halbleiteroberfläche des Substratkörpers 3 aufgebracht. Die gegenüberliegenden Seiten der Thermobatterie 1, an denen die Enden der Stege 8, 15 miteinander verbunden sind, werden als kalte bzw. warme Seite der Thermobatterie bezeichnet. Gemäß der Erfindung sind an den den kalten bzw. warmen Seiten zugeordneten gleich dimensionierten Seitenflächen des Substratkörpers 3 Anschlußteile 64, 65 aus einem Werkstoff hoher Wärmeleitfähigkeit anliegend befestigt. Dies ist in Fig.2 nicht dargestellt, jedoch in Fig. 7.

Gemäß einer zweckmäßigen Ausgestaltungsform der Erfindung haben die dotierten Stege 8 auf der Halbleiteroberfläche eine Länge von 0,5 mm, eine Breite von 10 µm, einer Eindringtiefe der p-Dotierung von etwa 2 µm.

Bei einem thermischen Gefälle zwischen den beiden Stirnseiten 20, 21 in Richtung des Pfeiles 10 der Thermomatrix 1 von ca. 10° C entsteht durch den Seebeck-Effekt zwischen den Anschlüssen 22, 23 der Thermobatterie 1 eine Thermospannung in der Größenordnung von einigen Volt, die z. B. zur Speisung eines nachgeschalteten Meßinstrumentes oder dergleichen Verwendung finden kann.

Die nutzbaren elektrischen Ströme liegen hierbei in der Größenordnung von einigen µA.

Die beiden Stirnseiten 20, 21 der Thermobatterie 1 stellen somit jeweils die "heiße" (20) und die "kalte" (21) Seite der Thermomatrix bzw. Thermbatterie 1 dar. Die an den Anschlüssen 22, 23 der Thermobatterie 1 sich einstellende Thermospannung Uₜₕ ist eine Funktion der sich aus dem Temperaturgefälle in Richtung des Pfeiles 10 ergebenden Differenz der Temperaturen zwischen den beiden Stirnseiten 20, 21.

Für die Herstellung der Thermomatrix (Thermobatterie) 1 ist eine Reihe von verschiedenen Schritten eines mikrotechnologischen Verfahrens erforderlich, mit welchem den komplexen Bedingungen technologischer Art des Gegenstandes der Erfindung entsprochen werden kann.

Ausgegangen wird bei dem Herstellungsverfahren vorteilhafterweise von einem n-implantierten oder n-dotierten Siliziumwafer als Basismaterial für den Substratkörper 3. Letzterer besteht entweder ausschließlich aus einem massiven n-Siliziumwafer oder aber aus einem Trägerteil 5 mit einer auf diesem aufgebrachten n-leitenden Halbleiterschicht 6.

Auf der Halbleiteroberfläche des n-leitenden Substratkörpers 3 wird dann eine Oxydschicht durch Behandlung in einer Wasserdampfphase bei entsprechender Temperatur erzeugt bzw. aufgebracht.

Anschließend wird auf die Oxydschicht eine Photolithographie-Maske für die nachfolgende Diffusion aufgebracht und belichtet, worauf die nichtbelichteten Teile herausgelöst werden.

Daraufhin erfolgt die Ätzung der Strukturierung für eine p-Diffusion, z. B. eine p-Bordiffusion, welche in einem Bordampfmedium bei einer Temperatur von etwa 1 000° C durchgeführt wird. Hierbei werden auf der Halbleiteroberfläche die p-dotierten Stege 8 nach dem vorgegebenen Raster ausgebildet.

Es folgt dann die Verfahrensphase der Siliziumnitritabscheidung oder einer eventuellen erneuten Oxidierung auf der gesamten Oberfläche der Halbleiterschicht 6.

Anschließend an diese Verfahrensstufe wird die Photolithographie-Maske zur Herstellung der Kontakte aufgebracht, der dann - nach Belichten und Herauslösen der Maske - die Ätzung der hierbei freigebliebenen Kontaktlöcher folgt.

Danach wird auf die Halbleiteroberfläche eine dünne Metallschicht, insbesondere eine Aluminiumschicht, aufgesputtert, auf welcher dann erneut eine Photolithographie-Maske für die Herstellung der Struktur der Metallstege 15 angeordnet wird.

Dieser Maskierung folgt nach Belichten und Herauslösen der nichtbelichteten Bereiche der Verfahrensschritt des Ätzens, durch welchen die einzelnen Metallstege 15 aus der geschlossenen Metallschicht, z. B. der Aluminiumschicht, herausgearbeitet werden. Durch das vorhergegangene Ätzen der Kontaktlöcher wird eine direkte Kontaktierung der Enden 12, 13 der dotierten Stege 8 mit der aufgebrachten Metallschicht, z. B. einer Aluminiumschicht, ermöglicht, welche nun mit den Enden 17, 18 der ausgearbeiteten Metallstege 15 kontaktgebend verbunden bleiben.

Nach diesen Verfahrensschritten wird die Thermomatrix 1 auf einem geeigneten Träger aufgebracht, worauf der elektrische Anschluß durch Metalldraht - vorzugsweise Aluminium-Gold-Bondung - erfolgt.

Um eine hohe Leistungsausbeute der Thermobatterie 1 nach der Erfindung zu erzielen, sollte der Substratkörper 3 so ausgestaltet werden, daß sich ein möglichst großes Temperaturgefälle zwischen der "heißen" und der "kalten" Seite des Substratkörpers 3 in Richtung des Pfeiles 10 einstellt. Dies wird zunächst dadurch begünstigt, daß die Wärmeleitfähigkeit zwischen der "heißen" und der "kalten" Seite 20, 21 des Substratkörpers 3 möglichst gering ist.

Um für eine möglichst geringe Wärmeleitfähigkeit des Substratkörpers 3 in Richtung des Pfeiles 10 (vgl. Fig. 1 und 2) zu sorgen, wird dem Substratkörper 3, wie die Fig. 2 und 7 zeigen, erfindungsgemäß eine bestimmte geometrische Form gegeben.

Für diesen Zweck ist auf der vom Raster 8, 15 abgewandten Seite des Substratkörpers 3, also auf dessen Rückseite, eine in Längsrichtung des Substratkörpers 3 verlaufende, vergleichsweise breite Grube 11 vorgesehen, mittels welcher der verbleibende nutzbare Querschnitt des Substratkörpers stark reduziert wird. Auf diese Weise wird der Einfluß des die Wärmeleitfähigkeit des Substratkörpers 3 ebenfalls beeinflussende Querschnitt deutlich verringert und auf den Querschnitt des verbleibenden Stegs 14 konzentriert.

Diese hinsichtlich des Querschnittes brücken- oder U-förmige Ausgestaltung des Substratkörpers 3 wird dadurch erzeugt, daß auf der dem Raster 8, 15 abgewandten Seite mit einem lithographischen Verfahren eine der Form der vorgesehenen Grube 11 entsprechende Maske aufgebracht wird, mittels welcher eine Abätzung der Grube 11 erfolgen kann.

Um eine Beeinträchtigung der Stabilität des auf diese Weise in seinem Querschnitt stark reduzierten Substratkörpers 3 zu vermeiden, wird die ausgeformte Grube 11 durch eine geeignete Vergußmasse, z. B. einen geeigneten Kunststoff, ausgefüllt, welche schlechter wärmeleitend ist, als das Material des Substratkörpers. Hierfür kommt ein Werkstoff z. B. in Form eines Klebers in Frage, der nach Möglichkeit die Wärmeleitfähigkeit des Substratwerkstoffes deutlich unterschreitet.

Durch die vorbeschriebene mikrotechnische Strukturierung des Querschnittes des Substratkörpers 3 der Thermomatrix 1 nach der Erfindung wird erreicht, daß der Wärmewiderstand zwischen den beiden Kontaktseiten der Thermobatterie 1 groß wird und somit eine maximale Temperaturdifferenz dT an den Thermoelementen 2 bei einem minimalen Wärmestrom erreicht wird.

Bei einer anderen Ausführungsform der Thermobatterie 1 nach der Erfindung wird das Raster 8, 15 auf dem Substratkörper 3 nicht durch eine Paarung dotierter Siliziumzonen 8, die auf einem Substratkörper 3 aus einem Halbleiterwerkstoff, z. B. Silizium, einer bestimmten Leitfähigkeit ausgebildet sind, mit Metallstegen 15 aus einem geeigneten Material bewerkstelligt. Statt dessen gelangen Paarungen von Metallstegen 15 aus unterschiedlichen Materialien, welche hierzu geeignet sind, zur Anwendung.

So ist z. B. eine Paarung von Werkstoffen wie Nickel und Eisen oder Nickel und Kupfer vorzugsweise geeignet. Auch Paarungen anderer Metalle sind in diesem Zusammenhang vorstellbar.

Als Träger gelangt hierzu zweckmäßig ein Substratkörper 3 aus Glas, insbesondere Quarzglas, zur Anwendung. Auf diesem Substratkörper 3 wird eine Metallschicht aus einem ersten Metall aufgedampft oder aufgesputtert und nach Aufbringen und Strukturieren einer Maske entsprechend beätzt, um die Metallstege 15 der einzelnen Thermoelemente 2 auszubilden. Diese Metallstege aus dem ersten Metall treten hierbei an die Stelle der dotierten Stege 8, bei einem Substratkörper 3 aus Halbleiterwerkstoff, z. B. Silizium.

Auf dieses Raster aus Metallstegen 15 des ersten Metallwerkstoffes wird eine geeignete Isolationsschicht aufgebracht, z. B. aus Lack, Kunststoff, Polysilizium. Diese Isolationsschicht wird dann mit einer weiteren Metallschicht aus einem zweiten Metall bedampft oder besputtert und nach Aufbringen und Strukturieren einer weiteren Maske ebenfalls entsprechend beätzt, um die Metallstege 15 des Gegenmetalls für die Thermoelemente 2 auszubilden.

Die Isolation zwischen den beiden Metallstegrastern 15 wird so strukturiert, daß die Enden 17, 18 der einzelnen Metallstege 15 beider Metallschichten miteinander in elektrische Verbindung gelangen und so die einzelnen Thermoelemente 2 gebildet werden.

Gemäß einer zweckmäßigen, zeichnerisch nicht im einzelnen dargestellten Ausgestaltung der Erfindung, können zur Erhöhung der aus der Thermobatterie 1 entnehmbaren elektrischen Leistung auf dem Substratkörper 3 mehrere solche flache Raster, jeweils isoliert voneinander, schichtartig übereinander, aufgebracht und elektrisch miteinander verbunden werden.

Durch geeignete Zusammenschaltung der einzelnen Raster bzw. Thermobatterien 1 auf der Fläche des Substratkörpers 3 kann eine Erhöhung der Spannung der gesamten Thermobatterie und/oder eine Verringerung des wirksamen Innenwiderstandes erzielt werden.

Die Isolation der Rasterebenen der einzelnen Thermobatterien gegeneinander erfolgt hierbei zweckmäßig mit in der Mikrotechnologie üblichen Isolierschichten, so z. B. Lack- oder Oxydschichten. Die Isolierschichten sind entsprechend strukturiert ausgebildet, wodurch die Anschlüsse für die Verbindung der einzelnen Raster untereinander und damit für die einzelnen Thermobatterien 1 freigegeben werden.

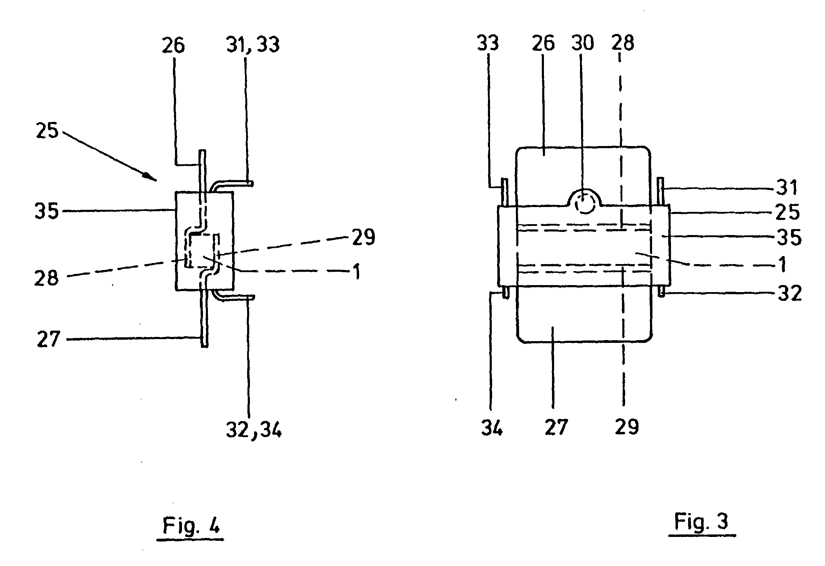

Mit den Fig. 3 und 4 ist eine Weiterbildung der erfindungsgemäßen Thermobatterie 1 dargestellt. Hierbei ist die Thermomatrix 1 vorzugsweise in Kunststoff eingebettet und bildet eine selbständige Baueinheit 25, die als Thermogenerator und als Temperaturmeßelement, d. h. als Temperatursensor, Verwendung finden kann.

Die Baueinheit 25 ist so dimensioniert, daß sie wenigstens in einem Teil ihrer Abmessungen denjenigen eines normmäßigen IC-Chips entspricht.

Um eine wärmeleitende Verbindung der "heißen" und der "kalten" Seiten 21, 22 der Thermomatrix 1 nach außen zu ermöglichen, sind thermische Anschlüsse 26 und 27 an der Baueinheit 25 vorgesehen, welche durch Kontaktbleche 28 und 29 - vorzugsweise aus Kupfer oder Aluminium - gebildet sind. Diese ermöglichen einen thermischen Kontakt mit den Wärmequellen der Thermobatterie 1 außerhalb des Gehäuses derselben.

In die Baueinheit 25 ist ferner erfindungsgemäß ein thermischer Sensor 30 integriert, vorzugsweise ein NTC-Fühler, der als thermischer Referenzfühler dient. Dieser Sensor kann auch direkt in den Substratkörper 3 der Thermobatterie 1 integriert sein.

Wie oben erwähnt, kann die Baueinheit 25 durch Umspritzen der einzelnen Bauteile, nämlich der Thermomatrix 1, der Kontaktbleche 28 und 29 und des thermischen Sensors 30, mit einem geeigneten Kunststofformverfahren gebildet werden. Hierbei können als Pins ausgebildete elektrische Anschlüsse 31 bis 34 an der Baueinheit 25 vorgesehen sein, welche vorteilhaft den Anschlüssen eines IC-Chips nachgebildet sind. Über diese Anschlüsse 31 bis 34 sind die Thermomatrix 1 (31, 32) und der thermische Sensor 30 (33, 34) elektrisch zugänglich, wobei die Anschlüsse 31, 32 mit den Anschlüssen 22, 23 der Thermomatrix (Thermobatterie) 1 z. B. durch Drahtbondung elektrisch verbunden sind.

Es ist auf diese Weise z. B. möglich, die thermische Baueinheit 25 mit ihrem Kunststoffgehäuse 35 auf einer gedruckten Leiterplatte 45 anzuordnen und deren Anschlüsse 31 bis 34 mit den Leiterbahnen der letzteren mit einem herkömmlichen Verfahren zu verbinden. Beim Einsatz der Baueinheit 25 sind deren thermische Anschlüsse 26, 27 in geeigneter Weise mit den thermischen Referenzquellen zu verbinden, so daß ein entsprechendes Wärmegefälle über die Thermomatrix 1 und damit eine entsprechende Temperaturdifferenz an dieser einstellbar ist.

Der Sensor 30 ist thermisch mit dem Anschluß 26 verbunden und vermittelt bedarfsweise über seine elektrischen Anschlüsse 33, 34 ein die am thermischen Anschluß 26 herrschende absolute Temperatur kennzeichnendes elektrisches Signal.

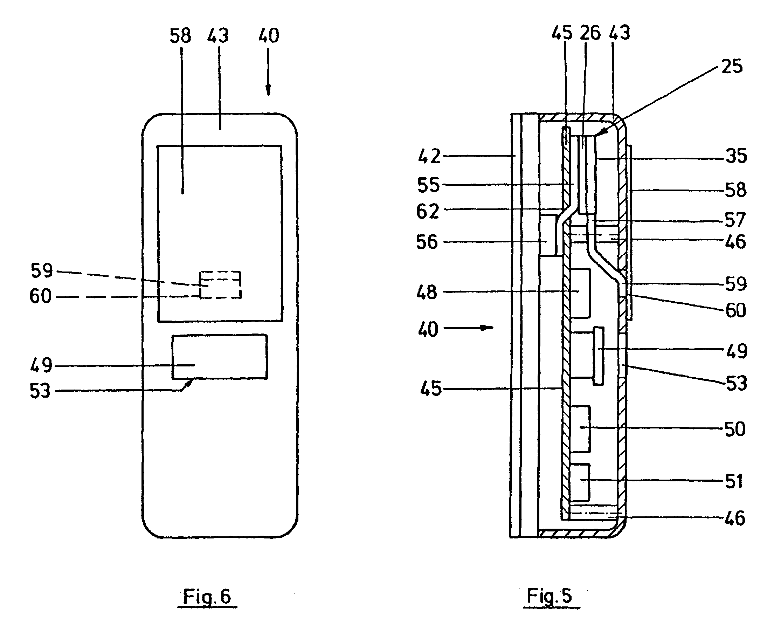

Mit den Fig. 5 und 6 ist ein elektronischer Heizkostenverteiler 40 schematisch dargestellt, bei welchem die erfindungsgemäße Thermomatrix 1 (siehe Fig. 7) bzw. ihre Baueinheit 25 Verwendung findet. Hierbei dient die Thermomatrix 1 sowohl als Stromquelle zur Speisung der elektronischen Meßschaltung als auch als Meßfühler zur Ermittlung der relevanten Temperaturdifferenz zwischen dem zu erfassenden Heizkörper und der Umlufttemperatur des betreffenden Raumes einer Wohneinheit.

Der Heizkostenverteiler 40 weist das als Gehäusegrundplatte dienende Adapterteil 42 auf, das aus wärmeleitendem Werkstoff, insbesondere Aluminium, besteht. Mit dem Adapterteil 42 ist der elektronische Heizkostenverteiler einerseits an dem zu erfassenden, nicht dargestellten Heizkörper angebracht. Andererseits dient das Adapterteil 42 der Wärmeleitung von dem Heizkörper zur Thermobatterie 1 bzw. ihrer Baueinheit 25 des Heizkostenverteilers 40.

Das als Gehäusegrundplatte dienende Adapterteil 42 ist mit dem Gehäusevorderteil 43 des elektronischen Heizkostenverteilers 40 verbunden, in welchen die elektrischen und elektronischen Baugruppen der Meß- und Anzeigeschaltung auf einer gedruckten Leiterplatte 45 angeordnet sind. Diese ist mit Tragbolzen 46 mit dem Gehäusevorderteil 43 verbunden. Auf der gedruckten Leiterplatte 45 ist die als Meß- und Thermogenerator dienende Baueinheit 25 mit der Thermomatrix 1 angeordnet und mit Leiterbahnen derselben verbunden.

Auf der gedruckten Leiterplatte 45 sind ferner u. a. ein Mikrocomputer 48, ein Anzeigesystem 49 sowie weitere integrierte Schaltungen 50, 51 vorgesehen, welche der Abwicklung der Meßprogramme des Heizkostenverteilers 40 dienen. Der Anzeigestand des Anzeigesystemes 49 ist durch ein Sichtfenster 53 im Gehäusevorderteil 43 ablesbar.

Die auf der gedruckten Leiterplatte 45 montierte thermoelektrische Baueinheit 25 steht mit ihrem thermischen Anschluß 26 über ein erstes wärmeleitendes Verbindungsteil 55 über ein Kontaktstück 56 mit dem Adapterteil 42 in wärmeleitender Verbindung.

Ebenso steht der weitere thermische Anschluß 27 der Baueinheit 25 über ein zweites wärmeleitendes Verbindungsteil 57 mit einem von der Umluft des betreffenden Raumes umströmten, wärmeleitenden Gehäuseteil 58 am Gehäusevorderteil 43 des Heizkostenverteilers 40 in Verbindung. Das Ende 59 dieses Verbindungsteiles 57 durchragt das Gehäusevorderteil 43 in einer Öffnung 60 und berührt dort wärmeleitend das Gehäuseteil 58, das als eine Metallplatte ausgebildet ist, die vorn auf das Gehäusevorderteil 43 aufgesetzt ist und z. B. zusätzlich als Gehäusetypenschild ausgebildet sein kann.

Vom nicht dargestellten Heizkörper und über das Adapterteil 42 sowie das Kontaktstück 56 und das Verbindungsteil 55 wird nun die mittlere Temperatur des Heizkörpers über den thermischen Anschluß 26 auf die "heiße" Seite 21 der Thermomatrix 1 der Baueinheit 25 übertragen.

Gleichzeitig wird die sich am Gehäuseteil 58 durch die strömende Umluft einstellende Temperatur über das Verbindungsteil 57 auf den in Fig. 5 nicht dargestellten thermischen Anschluß 27 und von dort auf die "kalte" Seite 22 der Thermobatterie 1 in der Baueinheit 25 übertragen.

An der Thermomatrix 1 bildet sich eine Temperaturdifferenz aus, die eine entsprechende Thermospannung zur Folge hat, welche als Meßkriterium für den momentanen Verbrauch am Heizkörper durch die nachgeordnete elektronische Auswerteschaltung erfaßt, unter Beachtung der geltenden Bewertungsfaktoren und Strahlungsfunktionen in die Auswertung einbezogen, gespeichert und/oder angezeigt werden kann.

Die thermoelektrische Baueinheit 25 ist zweckmäßigerweise zusammen mit den wärmeleitenden Verbindungsteilen 55, 57 auf der gedruckten Leiterplatte 45 montiert, wobei gleichzeitig die Anschlüsse 31, 32 und 33, 34 mit Leiterbahnen derselben verbunden sind. Das Verbindungsteil 55 ragt durch eine Ausnehmung 62 der gedruckten Leiterplatte 45 und trägt außen das Kontaktstück 56, das in bezug auf das Adapterteil 42 vorzugsweise federnd angeordnet ist, um stets eine wirksame Berührung mit dem Adapterteil 42 zu gewährleisten.

Gemäß der Erfindung ist, wie Fig. 7 zeigt, der Substratkörper 3 der Thermobatterie 1 bei der erfindungsgemäßen Ausgestaltung, welche eine mit Vergußmasse ausgefüllte Grube 11 besitzt, in Verbindung mit den beidseitigen Anschlußteilen 64, 65 hoher thermischer Leitfähigkeit, zu einem Thermomodul 70 zusammengefügt, das eine weitere Steigerung der elektrischen Leistungsentnahme ermöglicht.

Zu diesem Zweck sind die einseitig in Höhe des Substratkörpers 3 abgesetzten Anschlußteile 64, 65 mit den "heißen" und "kalten" Seiten 20, 21 des Substratkörpers 3 durch eine gut wärmeleitende Verbindung 68, 69 vereinigt. Diese Verbindung 68, 69 wird zweckmäßig durch Löten mit einem geeigneten Lot oder durch Kleben mit einem gut wärmeleitenden Kleber bewerkstelligt.

Die Bereiche zwischen den beiden thermischen Anschlußteilen 64, 65, nämlich unterhalb und oberhalb des Substratkörpers 3 des Thermomoduls 70, sind mit schlecht wärmeleitender Vergußmasse 16 ausgefüllt, um die Wärmeleitung zwischen den beiden Anschlußteilen 64, 65 auf den Substratkörper 3, und zwar insbesondere auf den Steg 14, zu konzentrieren.

Das Thermomodul 70 mit der Thermobatterie 1 stellt also eine optimierte Baueinheit dar, welche für die verschiedensten Anwendungen eingesetzt werden kann, bei denen eine thermoelektrische Messung und Energiegewinnung vorgesehen oder notwendig ist.

Die Ausbildung des Thermomoduls 70 ermöglicht auch bei noch sehr kleinen Temperaturdifferenzen dT eine relativ große Energieausbeute bzw. ein für die Auswertung ausreichend großes elektrisches Meßsignal.

Das erfindungsgemäße Thermomodul 70 eignet sich auch zum Einsatz bei der Baueinheit 25 gemäß den Fig. 3 und 4 und damit auch bei dem elektronischen Heizkostenverteiler nach den Fig. 5 und 6.

Bei der Baueinheit 25 ist das erfindungsgemäße Thermomodul 70 zwischen den Kontaktblechen 28, 29 für die thermischen Anschlüsse 26, 27 angeordnet und zusammen mit diesen, z. B. durch Umspritzen, mit dem Kunststoffgehäuse 35 umgeben, welches dem Schutz und dem Zusammenhalt der Baueinheit 25 dient.

### BEZUGSZEICHENLISTE

- 1: Thermomatrix/Thermobatterie
- 2: Thermoelement
- 3: Substratkörper

- 5: Träger
- 6: Halbleiterschicht

- 8: p-dotierte Stege

- 10: Pfeil für Temperaturgefälle
- 11: Grube, Vergußmasse
- 12: Ende
- 13: Ende
- 14: Steg
- 15: Metallstege
- 16: Vergußmasse in Fig. 7
- 17: Ende
- 18: Ende

- 20: Stirnseite
- 21: Stirnseite
- 22: Anschluß
- 23: Anschluß

- 25: Baueinheit
- 26: thermischer Anschluß
- 27: thermischer Anschluß
- 28: Kontaktblech
- 29: Kontaktblech
- 30: thermischer Sensor
- 31: elektrischer Anschluß
- 32: elektrischer Anschluß
- 33: elektrischer Anschluß
- 34: elektrischer Anschluß
- 35: Kunststoffgehäuse

- 40: Heizkostenverteiler

- 42: Adapterteil
- 43: Gehäusevorderteil

- 45: gedruckte Leiterplatte
- 46: Tragbolzen

- 48: Mikrocomputer
- 49: Anzeigesystem
- 50: integrierte Schaltung
- 51: integrierte Schaltung

- 53: Sichtfenster

- 55: Verbindungsteil
- 56: Kontaktstück
- 57: Verbindungsteil
- 58: Gehäuseteil
- 59: Ende
- 60: Öffnung

- 62: Ausnehmung

- 64: Anschlußteil
- 65: Anschlußteil
- 66: "heiße" Seite
- 67: "kalte" Seite
- 68: Verbindung
- 69: Verbindung
- 70: Thermomodul

## Patentansprüche

1. Stromversorgungseinrichtung
mit einer aus mehreren Thermoelementen (2) bestehenden Thermobatterie (1),
wobei die Thermoelemente (2) mittels eines mikrotechnologischen Verfahrens auf einem Substratkörper (3) geringer Wärmeleitfähigkeit aufgebracht sind und jeweils aus zwei Stegen (8,15) unterschiedlichen Materials aufgebaut sind,
wobei die Stege (8,15) jeweils eines Materials parallel zueinander in einer Ebene angeordnet sind und an ihren Enden (12,13;17,18) derart miteinander verbunden sind, daß die Thermoelemente (2) elektrisch in Reihe liegen, wobei jene gegenüberliegenden Seiten der Thermobatterie (1), an denen die Enden der Stege (8,15) miteinander verbunden sind, als kalte bzw. warme Seite der Thermobatterie (1) bezeichnet werden,
**dadurch gekennzeichnet,**
**daß** an beiden, den kalten bzw. heißen Seiten zugeordneten gleich dimensionierten Seitenflächen des Substratkörpers (3) Anschlußteile (64,65) aus einem Werkstoff hoher Wärmeleitfähigkeit anliegend befestigt sind und
**daß** der Substratkörper (3) auf seiner von Stegen (8,15) abgewandten Seite eine dessen Querschnitt in Teilbereichen verringernde, etwa senkrecht zu den Stegen (8,15) verlaufende Grube (11) aufweist, welche mit einem Material ausgefüllt ist, welches schlechter wärmeleitend ist als das Material des Substratkörpers (3).

2. Stromversorgungseinrichtung nach Anspruch 1,
**dadurch gekennzeichnet,**
**daß** die Thermoelemente (2) der Thermobatterie (1) durch einen aus Halbleiterwerkstoff (6) bestehenden Substratkörper (3) gebildet sind, an dessen Halbleiteroberläche wenigstens eine Reihe von nebeneinanderliegenden, isolierten, dotierten sowie mit einem mikrotechnologischen Verfahren erzeugten Stege (8) einer ersten Art in einer rasterartigen Anordnung angeordnet sind,
**daß** die einzelnen dotierten Stege (8) des Halbleiterwerkstoffes (6) mit ihren beiden Enden (12,13) durch dünnschichtige Metallstege (15) mit den jeweils entgegengesetzten Enden (13,12) der beiden jeweils benachbarten dotierten Stege (8) verbunden sind und
**daß** diese dotierten Stege (8) auf dem Halbleiterwerkstoff (6) mit ihrer Längsachse etwa in Richtung des thermischen Gefälles (Pfeil 10) verlaufend angeordnet sind.

3. Stromversorgungseinrichtung nach Anspruch 2,
**dadurch gekennzeichnet,**
**daß** der Halbleiterwerkstoff (6) des Substratkörpers (3) der Thermobatterie (1) n-dotiertes Material ist und
**daß** die dotierten Stege (8) durch Diffusion p-dotierte Bereiche des Halbleitermaterials sind.

4. Stromversorgungseinrichtung nach Anspruch 2 oder 3,
**dadurch gekennzeichnet,**
**daß** die dünnschichtigen, die dotierten Stege (8) des Halbleiterwerkstoffs (6) miteinander verbindenden Metallstege (15) aus einer auf die isolierte Oberfläche durch Sputtern aufgebrachte Metallschicht durch selektives Ätzen gebildete Teile sind.

5. Stromversorgungseinrichtung nach einem der Ansprüche 2 bis 4,
**dadurch gekennzeichnet,**
**daß** der Werkstoff der Metallstege (15) Aluminium ist.

6. Stromversorgungseinrichtung nach Anspruch 1, ,
**dadurch gekennzeichnet,**
**daß** die Thermobatterie (1) durch einen Substratköper (3) aus Glas oder Keramik gebildet ist, auf dessen Oberfläche nebeneinander aus einer aufgebrachten Metallschicht nach einem mikrotechnologischen Verfahren erzeugte leitende Stege (8) angeordnet sind,
**daß** auf den leitenden Stegen (8) eine letztere mit Ausnahme ihrer äußersten Enden (12,13) isolierende Schicht aufgebracht ist und
**daß** auf der isolierenden Schicht aus einer weiteren auf letzterer aufgebrachten Metallschicht nach einem mikrotechnologischen Verfahren ausgearbeitete leitende Stege (15) aus einem zweiten Werkstoff vorgesehen sind, welche jeweils mit ihren äußersten Enden (17,18) mit den entgegengesetzten Enden (13, 12) der beiden jeweils benachbarten Stege (8) aus dem ersten Werkstoff verbunden sind und so ein Leiternetz einer eng gepackten Thermomatrix (1) mit jeweils einander gegenüberliegenden Thermoelementen (2) bilden.

7. Stromversorgungseinrichtung nach Anspruch 6,
**dadurch gekennzeichnet,**
**daß** auf dem Substratkörper (3) außer der aus einem ersten Werkstoff bestehenden ersten Metallschicht und aus einer aus einem zweiten Werkstoff bestehenden zweiten Metallschicht und einer zwischen den beiden Metallschichten vorgesehenen Isolierschicht nach einem mikrotechnologischen Verfahren in Form eines Netzes ausgearbeiteten Basis-Thermobatterie (1) eine oder mehrere, weitere derartige Thermobatterien (1) sandwichartig übereinander, voneinander jeweils durch eine weitere Isolierschicht getrennt, angeordnet und elektrisch in geeigneter Weise miteinander zusammengeschaltet sind.

8. Stromversorgungseinrichtung nach einem der vorhergehenden Ansprüche,
**dadurch gekennzeichnet,**
**daß** auf der Thermobatterie (1) 500 bis 2.000 einzelne Thermoelemente (2) auf dem Substratkörper (3) zusammengefaßt sind.

9. Stromversorgungseinrichtung nach einem der vorhergehenden Ansprüche,
**dadurch gekennzeichnet,**
**daß** sie eine Wärmequelle (42) höherer Temperatur und eine Wärmequelle (58) niedrigerer Temperatur aufweist,
**daß** die heiße Seite (20) der Thermobatterie (1,70) über ein erstes wärmeleitendes Verbindungsteil (55) mit der Wärmequelle (42) höherer Temperatur und
**daß** die kalte Seite (21) der Thermobatterie (1) über eine zweites wärmeleitendes Verbindungsteil (57) mit der Wärmequelle (58) niedrigerer Temperatur verbunden sind.

10. Stromversorgungseinrichtung nach Anspruch 9,
**dadurch gekennzeichnet,**
**daß** die Wärmequelle (42) höherer Temperatur durch einen seiner Nutzung nach zu erfassenden Wärmespender und
**daß** die Wärmequelle (58) niedrigerer Temperatur durch die Umluft der Stromversorgungseinrichtung gebildet ist.

11. Stromversorgungseinrichtung nach einem der Ansprüche 1-8
**dadurch gekennzeichnet,**
**daß** die Thermobatterie (1) innerhalb eines Gehäuses (42,43) der Stromversorgungseinrichtung angeordnet ist.

12. Stromversorgungseinrichtung nach einem der vorhergehenden Ansprüche,
**dadurch gekennzeichnet,**
**daß** die Thermobatterie (1,70) als ein selbständiges Bauelement (25) ausgebildet ist, das mit einer Kunststoffumhüllung (35) versehen ist und an dem thermische Anschlüsse (26,27) für die heiße und kalte Seite (20,21) der Thermobatterie (1,70) sowie für elektrische Anschlüsse (31 bis 34) vorgesehen sind.

13. Stromversorgungseinrichtung nach Anspruch 12,
**dadurch gekennzeichnet,**
**daß** thermische Anschlüsse (26,27) als mit der Thermomatrix (1,70) in wärmeleitender Verbindung stehende Metallblechfahnen (28, 29) ausgebildet sind.

14. Stromversorgungseinrichtung nach Anspruch 12 oder 13,
**dadurch gekennzeichnet,**
**daß** der Thermomatrix (1,70) mindestens ein Temperatursensor (30) zugeordnet ist, der im Bauelement (25) der Thermobatterie (1,70) angeordnet ist oder unmittelbar in den Substratkörper (3) der Thermobatterie (1) integriert ist.

15. Stromversorgungseinrichtung nach einem der Ansprüche 12 bis 14,
**dadurch gekennzeichnet,**
**daß** die Kunststoffumhüllung (35) nach Art und Abmessungen eines herkömmlichen IC-Chips ausgestaltet ist und
**daß** die elektrischen Anschlüsse (31 bis 34) nach Art der "Pins" eines solchen IC-Chips ausgebildet sind.

16. Elektrischer Heizkosten- oder Warmwasserkostenverteiler (40),
**gekennzeichnet durch**
eine Stromversorgungseinrichtung nach einem der vorhergehenden Ansprüche,
wobei die Thermobatterie (1,70) sowohl als elektrische Energiequelle als auch als elektrischer Temperaturfühler des elektrischen Heizkosten- oder Warmwasserkostenverteilers (40) ausgebildet ist.

17. Elektrischer Heizkosten- oder Warmwasserkostenverteiler nach Anspruch 16,
**dadurch gekennzeichnet,**
**daß** ein mit der heißen Seite (20) der Thermobatterie (1,70) verbundenes erstes wärmeleitendes Verbindungsteil (55) mit einem Adapterteil (42) des Heizkosten- oder Warmwasserkostenverteilers (40) wärmeleitend verbunden ist und
**daß** ein mit der kalten Seite (21) der Thermobatterie (1,70) verbundenes zweites wärmeleitendes Verbindungsteil (57) mit einem von der Umluft umströmten Teil (58) des Heizkostenverteilers (40) wärmeleitend verbunden ist.

18. Elektrischer Heizkosten- oder Warmwasserkostenverteiler nach Anspruch 16 oder 17,
**dadurch gekennzeichnet,**
**daß** ein zweites wärmeleitendes Verbindungsteil (57) mit einem von der Umluft umströmten Teil (58) eines Gerätegehäuses (43) des Heizkostenverteilers (40) wärmeleitend verbunden ist.

19. Elektrischer Heizkosten- oder Warmwasserkostenverteiler nach einem der Ansprüche 16 bis 18,
**dadurch gekennzeichnet,**
**daß** ein thermoelektrisches Bauelement (25) zusammen mit den wärmeleitenden Verbindsteilen (55,57) auf einer gedruckten Leiterplatte (45) des Heizkostenverteilers (40) angeordnet sind und die Verbindungsteile (55, 57) mit den thermischen Anschlüssen (26, 27) der Baueinheit (25) wärmeleitend verbunden sind und
**daß** elektrische Anschlüsse (31 bis 34) der Baueinheit (25) mit Leiterbahnen der gedruckten Leiterplatte (45) verbunden sind.

20. Mikrotechnologisches Verfahren zur Herstellung einer elektrischen Thermobatterie für eine Stromversorgungseinrichtung nach einem der Ansprüche 1 bis 16,
**gekennzeichnet durch**
die nachfolgenden Verfahrensschritte:
1) Oxydation der Halbleiteroberfläche eines n-Silizium-Substratkörpers (3)
2) Aufbringen einer Foto-Lithographie-Maske zwecks Diffusion auf der Halbleiteroberfläche in folgenden Bearbeitungsstufen:
a) Beschichten
b) Belichten
c) Herauslösen der Maske
3) Ätzen der Struktur aus der Oxydschicht zur Ausbildung der dotierten Stege (8) in sehr hoher Anzahl auf dem Substratkörper (3)
4) p-Dotierung der Struktur der zu dotierenden Stege (8) auf dem Substratkörper (3) **durch** Diffusion oder Implantation
5) Siliziumnitridabscheidung oder Siliziumoxydabscheidung auf der strukturierten Halbleiteroberfläche
6) Aufbringen einer Foto-Lithographie-Maske zwecks Bildung der Kontakte in folgenden Bearbeitungsstufen:
a) Beschichten
b) Belichten
c) Herauslösen der Maske
7) Ätzen der Kontakte
8) Metallsputtern der Halbleiteroberfläche des Substratkörpers (3)
9) Aufbringen einer Foto-Lithographie-Maske zwecks Bildung einer Struktur aus die dotierten Stege (8) miteinander verbindenden dünnschichtigen Metallstegen (15) in folgenden Bearbeitungsstufen:
a) Beschichten
b) Belichten
c) Herauslösen der Maske, wobei die Struktur so ausgebildet wird, daß die einzelnen dotierten Stege (8) des Halbleiterwerkstoffes (6) mit ihren beiden Enden (12,13) **durch** die Metallstege (15) mit den jeweils entgegengesetzten Enden (13,12) der beiden jeweils benachbarten dotierten Stege (8) verbunden sind, und sich damit eine Vielzahl von Thermoelementen ergibt, wobei Metallstege (15) und dotierte Stege (8) aus verschiedenen Materialien bestehen und die Stege jeweils eines Materials parallel zueinander in einer Ebene angeordnet sind und die Thermoelemente folglich in Reihe liegen.
10) Ätzen der Metallstege (15) aus der Metallschicht
11) Aufbringen einer rückseitigen Lithographie-Maske zwecks Abdünnung auf dem Substratkörper (3) in folgenden Bearbeitungsstufen:
a) Beschichten
b) Belichten
c) Herauslösen der Maske
12) Abdünnen des Substratkörpers (3) auf seiner Rückseite **durch** Ätzen, so daß sich eine etwa senkrecht zu den Metallstegen (15) verlaufende Grube (11) ergibt
13) Auffüllen der Grube (11) mit einem Material zur mechanischen Stabilisierung, welches schlechter wärmeleitend ist als das Material des Substratkörpers (3)
14) Aufbringen des nach dem mikrotechnologischen Verfahren bearbeiteten Substratkörkpers (3) auf ein Trägerteil
15) Metall-Draht-Bondung für die Anschlüsse (22,23) der Thermobatterie (1)
16) Befestigen von Anschlußteilen (64,65) aus einem Werkstoff hoher Wärmeleitfähigkeit an beiden, den kalten bzw. heißen Seiten zugeordneten gleich dimensionierten Seitenflächen des Substratkörpers (3).

## Claims

1. Current supply device
with a thermal battery (1) consisting of several thermal elements (2), the battery having a cold side kept at a low temperature and a hot side kept at a higher temperature by means of a heat source,
the thermal elements (2) being mounted on a substrate body (3) with low heat conductivity by means of a micro-technological process and being made of two bars (8, 15) of differing materials,
the bars (8, 15) of either material being arranged parallel to each other on one plane and being connected in the area of the hot and cold sides at their ends (12, 13, 17, 18) in such a way that the thermal elements (2) are electrically positioned in series,
**characterised by**
connector parts (64, 65) made of a material with high heat conductivity being attached adjacent to the two identically dimensioned side surfaces of the substrate body (3) assigned to the cold and hot sides and
the substrate body (3) having a cavity (11) on the side facing away from the bars (8, 15), the cavity extending more or less perpendicular to the bars and reducing portions of the substrate body's cross section, the cavity being filled with a material with a lower heat conductivity than the material of the substrate body (3).

2. Current supply device as claimed in claim 1,
**characterised by**
the thermal elements (2) of the thermal battery (1) being formed by a substrate body (3) made of a semiconductor material (6) with at least one row of adjacent, insulated, doped bars (8) produced by a micro-technological process of a first type being are arranged in a grid-like fashion on the substrate body's semiconductor surface,
the individual doped bars (8) of the semiconductor material (6) being connected at their two ends (12, 13) by thin-layered metal bars (15) to the opposite ends (13, 12) of the two neighbouring doped bars (8) and
these doped bars (8) being arranged on the semiconductor material (6) with their lateral axis extending in about the direction of the thermal gradient (Arrow 10).

3. Current supply device as claimed in claim 2,
**characterised by**
the semiconductor material (6) of the substrate body (3) of the thermal battery (1) is n-doped material and
as a result of diffusion the doped bars (8) of the semiconductor material are p-doped areas.

4. Current supply device as claimed in claim 2 or 3,
**characterised by**
the thin-layered metal bars (15) that connect the doped bars (8) of the semiconductor material (6) being parts made by selective etching of a metal layer applied to the insulated surface by means of sputtering.

5. Current supply device as claimed in one of the claims 2 to 4,
**characterised by**
the material of the metal bars (15) being aluminium.

6. Current supply device as claimed in claim 1,
**characterised by**
the thermal battery (1) being formed of a glass or ceramic substrate body (3), with conductive bars (8) made of an applied metal layer according to a micro-technological process being arranged on the body's surface,
a final insulating layer being applied to the conductive bars (8), the layer being non-insulating at the bars' outermost ends (12, 13) and
conductive bars (15) made of a second material being formed according to a micro-technological process on the insulating layer from a further metal layer applied on the former layer, the bars being connected with their outermost ends (17, 18) to the opposite ends (12, 13) of the neighbouring bars (8) made of the first material, thus forming a conductor network of a tightly packed thermal matrix (1) with thermal elements (2) on opposite sides.

7. Current supply device as claimed in claim 6,
**characterised by**
one or more thermal batteries (1) - apart from the basic thermal battery (1) formed a first metal layer and a second metal layer consisting of a second material and an insulating layer provided between these metal layers according to a micro-technological process in the shape of a network - being arranged on the substrate body (3) in a sandwich-like fashion on top of each other separated by another by a further insulation layer, and being appropriately electrically connected with each other.

8. Current supply device as claimed in one of the preceding claims,
**characterised by**
500 to 2000 individual thermal elements (2) being combined on the substrate body (3) on the on the thermal battery (1).

9. Current supply device as claimed in one of the preceding claims,
**characterised by**
the hot side (20) of the thermal battery (1, 70) being connected through a first heat-conductive connection part (55) to a heat source (42) of a higher temperature and the cold side (21) of the thermal battery (1) being connected through a second heat-conductive connection part (57) to a heat source (58) of a lower temperature.

10. Current supply device as claimed in claim 9,
**characterised by**
the heat source (42) of higher temperature being created by a heat provision unit to be established according to its use and
the heat source (58) of lower temperature being created by the circulating air of the power supply unit.

11. Current supply device as claimed in one of the preceding claims,
**characterised by**
the thermal battery (1) being located within a housing (42, 43) of the power supply unit.

12. Current supply device as claimed in one of the preceding claims,
**characterised by**
the thermal battery (1, 70) being designed as an independent component (25) having a plastic encasing (35), the component being provided with thermal connections (26, 27) for the hot and the cold side (20, 21) of the thermal battery (1,70) as well as for electrical connections (31 - 34).

13. Current supply device as claimed in claim 12,
**characterised by**
the thermal connections (26, 27) being designed as beamleads (28, 29) in heat-conductive contact with the thermal matrix (1, 70).

14. Current supply device as claimed in claim 12 or 13,
**characterised by**
at least one more temperature sensor (30) being allocated to the thermal matrix (1, 70) the sensor being located in the component (25) of the thermal battery (1, 70) or directly integrated in the substrate body (3) of the thermal battery (1).

15. Current supply device as claimed in one of the claims 12 to 14,
**characterised by**
the plastic encasing (35) being designed according to the type and dimension of a common IC chip and
the electrical connections (31 to 34) being designed as pins of such an IC chip.

16. Current supply device as claimed in one of the preceding claims,
**characterised by**
the thermal battery (1, 70) being designed as an electrical source of energy as well as an electrical temperature sensor of an electrical heating cost distributor or hot water cost distributor (40).

17. Current supply device as claimed in claim 16,
**characterised by**
a first heat-conductive connection part (55) connected to the hot side (20) of the thermal battery (1, 70) having a heat-conductive connection to an adapter part (42) of the heating cost or hot water cost distributor (40) and
a second heat-conductive connection part (57) connected to the cold side (21) of the thermal battery (1, 70) having a heat-conductive connection to an part (58) of the heating cost distributor (40), the latter part being ventilated by circulating air.

18. Current supply device as claimed in claim 16 or 17,
**characterised by**
a second heat-conductive connection part (57) having a heat-conductive connection to a part (58) of the heating cost distributor's device housing (43), the latter part being ventilated by circulating air.

19. Current supply device as claimed in one of the claims 16 to 18,
**characterised by**
a thermoelectric component (25) together with the heat-conductive connection parts (55, 57) being arranged on a printed circuit board (45) of the heating cost distributor (40) and the connection parts (55, 57) having a heat-conductive connection to the thermal connections (26, 27) of the component (25) and
the electrical connections (31 to 34) of the component (25) being connected to tracks of the printed circuit board (45).

20. Micro-technological method for producing an electrical thermal battery for a current supply device as claimed in one of the claims 1 to 19,
**characterised by**,
the following process steps:
1. Oxidation of the semiconductor surface of an n-silicon substrate body (3)
2. Applying a photo lithography mask for the purpose of diffusion on the semiconductor surface in the following processing stages:
a) Coating
b) Exposing
c) Removing the mask
3. Etching the structure from the oxide layer to form the doped bars (8) in great numbers on the substrate body (3)
4. p-doping the structure of the bars (8) to be doped on the substrate body (3) by means of diffusion or implantation
5. Silicon nitride or silicon oxide separation on the structured semiconductor surface.
6. Applying a photo lithography mask for the purpose of creating the contacts in the following processing stages:
a) Coating
b) Exposing
c) Removing the mask
7. Etching the contacts
8. Metal-sputtering the semiconductor surface of the substrate body (3)
9. Applying a photo lithography mask for the purpose of creating the structure of the metal bars (15) on the metal layer in the following processing stages:
a) Coating
b) Exposing
c) Removing the mask
10. Etching the metal bars (15) from the metal layer
11. Applying a rear lithography mask for the purpose of thinning on the substrate body (3) in the following processing stages:
a) Coating
b) Exposing
c) Removing the mask
12. Thinning the substrate body (3) on its rear side by means of etching
13. Filling up the cavity (11) for mechanical stabilisation with a material that is less heat-conductive than the material of the substrate body (3)
14. Applying the substrate body (3) processed according to the micro-technological process to a support part
15. Metal wire bonding for the connections (22, 23) of the thermal battery (1).

## Revendications

1. Dispositif d'alimentation en courant,
comprenant une pile thermique (1) constituée de thermocouples (2) présentant un côté froid maintenu à une température plus basse et un côté chaud maintenu à une température plus élevée à l'aide d'une source de chaleur,
les thermocouples (2) étant déposés sur un corps de substrat (3) de faible conductivité thermique à l'aide d'un procédé microtechnologique et étant respectivement constitués de deux moulures (8, 15) de matières différentes,
les moulures (8, 15) d'une même matière étant respectivement disposées parallèlement les unes aux autres dans un plan et étant reliées les unes aux autres, par leurs extrémités (12, 13; 17, 18) respectivement situées dans les champs des côtés chaud et froid, de telle façon que les thermocouples (2) soient agencés électriquement en série,
**caractérisé en ce que**,
des pièces de raccordement (64, 65) faites en une matière ayant une conductivité thermique élevée sont fixées, en les contactant, sur les deux surfaces latérales du corps de substrat (3), qui sont respectivement associées aux côtés froid et chaud et dont les dimensions sont égales, et que
le corps de substrat (3) comporte, du côté opposé aux moulures (8, 15), un évidement (11) s'étendant à peu près perpendiculairement aux moulures (8, 15), réduisant partiellement, par endroits, la section transversale dudit corps, et étant rempli d'une matière dont la conductivité thermique est inférieure à celle de la matière du corps de substrat (3).

2. Dispositif d'alimentation en courant selon la revendication 1,
**caractérisé en ce que**
les thermocouples (2) de la pile thermique (1) sont formés par un corps de substrat (3) constitué d'un matériau semi-conducteur (6), à la surface semi-conductrice duquel est aménagée au moins une série de moulures (8) d'un premier type, disposées les unes à côté des autres, isolées, dopées et réalisées à l'aide d'un procédé microtechnologique, positionnées selon une disposition tramée,
que les différentes moulures dopées (8) du matériau semi-conducteur (6) sont reliées, par leurs deux extrémités (12, 13), aux extrémités opposées (13, 12) des deux moulures dopées contiguës (8) par l'intermédiaire de moulures métalliques minces (15), et que
lesdites moulures dopées (8) aménagées sur le matériau semi-conducteur (6) s'étendent, quant à leur axe longitudinal, à peu près dans le sens du gradient thermique (flèche 10).

3. Dispositif d'alimentation en courant selon la revendication 2,
**caractérisé en ce que**
le matériau semi-conducteur (6) du corps de substrat (3) de la pile thermique (1) est un matériau dopé de type "n", et que
les moulures (8) dopées sont des zones du matériau semi-conducteur qui ont été dopées par diffusion par un dopage de type "p".

4. Dispositif d'alimentation en courant selon la revendication 2 ou 3,
**caractérisé en ce que**
les moulures métalliques (15) reliant les moulures dopées minces (8) du matériau semi-conducteur (6) entre elles sont des éléments produits par gravure sélective dans une couche métallique déposée sur la surface isolée par pulvérisation cathodique

5. Dispositif d'alimentation en courant selon l'une des revendications 2 à 4,
**caractérisé en ce que**
la matière des moulures métalliques (15) est de l'aluminium.

6. Dispositif d'alimentation en courant selon la revendication 1,
**caractérisé en ce que**
la pile thermique (1) est constituée d'un corps de substrat (3) en verre ou en un matériau céramique à la surface duquel sont aménagées des moulures conductrices (8) disposées les unes à côté des autres, réalisées à l'aide d'un procédé microtechnologique dans une couche métallique rapportée,
qu'une couche isolante est déposée sur les moulures conductrices (8), qui isole ces dernières à l'exception des extrémités (12, 13) de celles-ci, et **en ce que**
des moulures conductrices (15) faites en une deuxième matière, façonnées, à l'aide d'un procédé microtechnologique, dans une autre couche métallique déposée sur la couche isolante, sont prévues sur cette dernière, les extrémités (17, 18) de ces moulures étant respectivement reliées aux extrémités opposées (13, 12) des deux moulures (8) contiguës faites de ladite première matière, créant ainsi un réseau de conducteurs d'une matrice thermique (1) de haute densité composée de thermocouples (2) opposés les uns aux autres.

7. Dispositif d'alimentation en courant selon la revendication 6,
**caractérisé en ce que**
outre la pile thermique (1) de base, réalisée, par un procédé microtechnologique, sous forme d'un réseau créé à partir d'une première couche métallique et d'une deuxième couche métallique faite d'une deuxième matière, et d'une couche isolante prévue entre les deux couches métalliques, une ou plusieurs autres pile(s) thermique(s) (1) de ce genre est/sont agencée(s) par strates superposées respectivement isolées les unes des autres par une couche isolante supplémentaire, et électriquement raccordées les unes aux autres d'une manière appropriée.

8. Dispositif d'alimentation en courant selon l'une des revendications précédentes,
**caractérisé en ce que**
de 500 à 2.000 thermocouples individuels (2) sont réunis sur le corps de substrat (3) pour former une pile thermique (1).

9. Dispositif d'alimentation en courant selon l'une des revendications précédentes,
**caractérisé en ce que**
le côté chaud (20) de la pile thermique (1, 70) est relié, par l'intermédiaire d'un élément de liaison (55) conduisant la chaleur, à une source de chaleur (42) d'une température supérieure, et que
le côté froid (21) de la pile thermique (1) est relié, par l'intermédiaire d'un second élément de liaison (57) conduisant la chaleur, à une source de chaleur (58) d'une température inférieure.

10. Dispositif d'alimentation en courant selon la revendication 9,
**caractérisé en ce que**
la source de chaleur (42) de température supérieure est constituée par une source de chaleur pouvant être déterminée selon son utilisation, et que
la source de chaleur (58) de température inférieure est constituée par l'air ambiant entourant le dispositif d'alimentation en courant.

11. Dispositif d'alimentation en courant selon l'une des revendications précédentes,
**caractérisé en ce que**
la pile thermique (1) est logée à l'intérieur d'un carter (42, 43) du dispositif d'alimentation en courant.

12. Dispositif d'alimentation en courant selon l'une des revendications précédentes,
**caractérisé en ce que**
la pile thermique (1, 70) est configurée comme un composant autonome (25) pourvu d'une enveloppe (35) en matière plastique, sur lequel sont prévus des raccords thermiques (26, 27) respectivement prévus pour les côtés chaud et froid (20, 21) de la pile thermique (1, 70), ainsi que des bornes de raccordement électrique (31 à 34).

13. Dispositif d'alimentation en courant selon la revendication 12,
**caractérisé en ce que**
les raccords thermiques (26, 27) sont réalisés sous forme de languettes (28, 29) en tôle métallique maintenues en liaison thermiquement conductrice avec la matrice thermique (1, 70).

14. Dispositif d'alimentation en courant selon la revendication 12 ou 13,
**caractérisé en ce que**
au moins un autre capteur de température (30) est associé à la matrice thermique (1, 70), capteur qui est disposé dans le composant (25) de pile thermique (1, 70) ou est directement intégré dans le corps de substrat (3) de la pile thermique (1).

15. Dispositif d'alimentation en courant selon l'une des revendications 12 à 14,
**caractérisé en ce que**
l'enveloppe (35) en matière plastique est réalisée à la manière et aux dimensions d'une puce à circuit intégré classique, et que les bornes de raccordement électrique (31 à 34) sont réalisées à la manière des broches ou "pattes" d'une telle puce à circuit imprimé.

16. Dispositif d'alimentation en courant selon l'une des revendications précédentes,
**caractérisé en ce que**
la pile thermique (1, 70) est configurée à la fois comme une source d'énergie électrique et comme un capteur électrique de température d'un compteur répartiteur électrique (40) de chauffage ou d'eau chaude.

17. Dispositif d'alimentation en courant selon la revendication 16,
**caractérisé en ce que**
un premier élément de liaison (55) thermiquement conducteur relié au côté chaud (20) de la pile thermique (1, 70) est en liaison thermiquement conductrice avec un élément adaptateur (42) du compteur répartiteur (40) de chauffage ou d'eau chaude, et que un second élément de liaison (57) thermiquement conducteur relié au côté froid (21) de la pile thermique (1, 70) est en liaison thermiquement conductrice avec un élément (58) du compteur répartiteur (40) de chauffage, qui est exposé à l'air ambiant.

18. Dispositif d'alimentation en courant selon la revendication 16 ou 17,
**caractérisé en ce que**
un second élément de liaison thermiquement conducteur (57) est en liaison thermiquement conductrice avec un élément (58) du carter (43) de l'appareil compteur répartiteur (40) de chauffage, qui est exposé à l'air ambiant.

19. Dispositif d'alimentation en courant selon l'une des revendications 16 à 18,
**caractérisé en ce que**
un composant thermoélectrique (25) est disposé conjointement avec les éléments de liaison thermiquement conducteurs (55, 57) sur une carte de circuit imprimé (45) du compteur répartiteur (40) de chauffage, et que les éléments de liaison (55, 57) sont en liaison thermiquement conductrice avec les raccords thermiques (26, 27) du composant (25), et que
les bornes de raccordement électrique (31 à 34) du composant (25) sont reliées à des pistes de la carte de circuit imprimé (45).

20. Procédé microtechnologique de fabrication d'une pile thermoélectrique pour un dispositif d'alimentation en courant selon l'une des revendications 1 à 19,
**caractérisé par**
les étapes suivantes du procédé :
1. oxydation de la surface semi-conductrice d'un corps de substrat (3) en silicium de type "n"
2. application d'un masque de photo-lithographie, en vue d'un traitement de diffusion, sur la surface semi-conductrice, selon les étapes suivantes de traitement :
a) couchage
b) exposition
c) détachement du masque,
3. gravure à l'acide de la structure de la couche d'oxyde en vue de former un très grand nombre des moulures dopées (8) sur le corps de substrat (3),
4. dopage de type "p" de la structure des moulures (8) à doper sur le corps de substrat (3), par diffusion ou par implantation,
5. précipitation de nitrure de silicium ou d'oxyde de silicium à la surface semi-conductrice structurée,
6. application d'un masque de photo-lithographie, en vue de la création des contacts, selon les étapes suivantes de traitement :
a) couchage
b) exposition
c) détachement du masque,
7. élaboration des contacts par gravure à l'acide,
8. pulvérisation cathodique de métaux à la surface semi-conductrice du corps de substrat (3),
9. application d'un masque de photo-lithographie, en vue de la création de la structure des moulures métalliques (15) à la surface métallique, selon les étapes suivantes de traitement :
a) couchage
b) exposition
c) détachement du masque,
10. élaboration des moulures métalliques (15) dans la couche métallique par gravure à l'acide
11. application d'un masque verso de photo-lithographie sur le corps de substrat (3), en vue d'un évidement de celui-ci, selon les étapes suivantes de traitement :
a) couchage
b) exposition
c) détachement du masque,
12. évidement de la face verso du corps de substrat par gravure à l'acide,
13. remplissage de l'évidement (11) en une matière assurant une stabilisation mécanique et présentant une conductivité thermique inférieure à celle de la matière du corps de substrat (3),
14. dépôt du corps de substrat (3) ainsi réalisé selon le procédé microtechnologique sur un élément de support,
15. microcâblage filaire dit 'wire-bonding' des points de raccordement (22, 23) de la pile thermique (1).
